# EUROPÄISCHE PATENTANMELDUNG

(11) **EP 1 431 944 A2**
(43) Veröffentlichungstag der Anmeldung: **23.06.2004**
(21) Anmeldenummer: 03023413.2
(22) Anmeldetag: 17.10.2003
(51) Int. Cl.: G08C 17/00

(54) **Abdeckung, insbesondere aus einem metallischen Werkstoff**

(30) Priorität: 21.12.2002 DE 20219886 U
(71) Anmelder: Hermann Sewerin GmbH, 33334 Gütersloh (DE)
(72) Erfinder: Seidel, Frank, 33332 Gütersloh (DE); Matlachowski, Ingo, 33415 Verl (DE); Bies, Thierry, 57350 Schoeneck (FR)
(74) Vertreter: Dantz, Jan Henning

(57) **Zusammenfassung**

Eine Abdeckung, insbesondere aus einem metallischen Werkstoff, mit der ein Hohlraum verschließbar ist, in dem ein mit einer Antenne (6) versehener Sender zur Übertragung von Messdaten, vorzugsweise einer Leckagemessung an Gas oder Flüssigkeit führenden Rohren platziert ist, ist so ausgebildet, dass die Abdeckung ( 1 ) eine Durchbrechung (2) zum ungehinderten Durchtritt der über die Antenne (6) ausgesandten Signale aufweist.

## Beschreibung

Die vorliegende Erfindung betrifft eine Abdeckung, insbesondere aus einem metallischen Werkstoff, mit der ein Hohlraum verschließbar ist, in dem ein mit einer Antenne versehener Sender zur Übertragung von Messdaten, vorzugsweise einer Leckagemessung an Gas oder Flüssigkeit führenden Rohren platziert ist.

Eine Leckagemessung an beispielsweise Flüssigkeit führenden Rohren, wie Wasserleitungen im öffentlichen Netz, erfolgt beispielsweise mittels einer sogenannten Geräuschpegelmessung, die vorzugsweise nachts durchgeführt wird, wenn der Störgeräuscheanteil gering ist.

Die ermittelten Daten werden gespeichert und anschließend durch den Sender, der zum Beispiel durch ein Mobilfunk-Telefon gebildet sein kann, an eine Zentrale gesandt, wo sie entsprechend ausgewertet werden.

Üblicherweise werden die Sender in Einrichtungen deponiert, die der Öffentlichkeit zugänglich sind bzw. im Bereich öffentlicher Verkehrswege liegen.

Hierzu zählen insbesondere Hydranten, Schieber oder Schächte, die durch entsprechende Abdeckungen geschützt sind, die vornehmlich aus einem Deckel und einem umfänglichen Rand bestehen.

Diese Abdeckungen sind üblicherweise aus Metall, insbesondere aus Gusseisen, um sie sowohl bei Anordnung auf Flurniveau für die auftretenden, verkehrsbedingten Belastungen hinsichtlich ihrer Festigkeit ausreichend zu dimensionieren, wie auch vor Beschädigungen allgemeiner Art zu schützen.

Allerdings bildet der metallische Werkstoff eine Abschirmung gegenüber den Signalen, die über die unterhalb der Abdeckung platzierte Antenne ausgesandt werden.

Dies führt zu einer ungesicherten Datenübermittlung, unter Umständen sogar zu deren Verhinderung, so dass eine zuverlässige Leckagemessung, die den Datentransfer mit einschließt, nicht gewährleistet ist.

Der vorliegenden Erfindung liegt daher die Aufgabe zugrunde, eine Abdeckung der gattungsgemäßen Art so weiter zu entwickeln, dass der Betrieb eines darunter liegenden Senders uneingeschränkt möglich ist.

Diese Aufgabe wird durch eine Abdeckung gelöst, die eine Durchbrechung zum ungehinderten Durchtritt der über die Antenne ausgesandten Signale aufweist.

Diese Ausbildung der Abdeckung garantiert einen störungsfreien Betrieb bei der Übermittlung der erfassten Daten, sowohl der gesendeten wie auch gegebenenfalls empfangener.

Dabei kann die Antenne unmittelbar unterhalb der Durchbrechung angeordnet sein. Denkbar ist aber auch, sie direkt in der Durchbrechung zu platzieren. In jedem Fall so, dass die Signale ungehindert austreten können.

Um die Antenne sowie den unterhalb der Abdeckung angeordneten Sender und/oder gegebenenfalls Empfänger vor Verschmutzungen oder dergleichen zu schützen, ist nach einem weiteren Gedanken der Erfindung die Durchbrechung mit einem geeigneten Material ausgegossen, das einerseits eine solche Konsistenz aufweist, dass eine Beschädigung unter normalen Betriebsbedingungen nicht eintritt, und andererseits einen freien Signalaustritt zulässt.

Als geeignetes Füllmaterial sind Gießharze oder dergleichen denkbar, die vorzugsweise gewisse elastische Eigenschaften aufweisen.

Die Durchbrechung kann schlitzförmig ausgebildet sein und ist in ihren Grundrissabmaßen im wesentlichen der Antenne angepasst.

Ein weiterer Gedanke der Erfindung sieht vor, dass die Durchbrechung durch einen zwischen dem Deckel und dem umfänglichen Rand der Abdeckung vorhandenen Ringspalt gebildet ist.

Dabei kann die Antenne direkt in dem Ringspalt angeordnet sein, wobei dieser weitgehend mit einem nicht leitenden Material ausgefüllt ist, durch das zum einen eine Verschmutzung verhindert und zum anderen ein Isolator geschaffen wird, durch den die relevanten Antennenteile elektrisch voneinander getrennt sind.

Ein solcher Isolator kann aus unterschiedlichen Materialien bestehen, beispielsweise aus Gummi oder einem geeigneten Kunststoff. Wesentlich ist, dass der Isolator hinsichtlich hochfrequenter elektromagnetischer Wellen nicht leitend ist.

Prinzipiell können dann, wenn der Deckel und der Rand der Abdeckung aus einem leitenden Material bestehen, beispielsweise aus Stahl oder Gusseisen, diese selbst die Antenne bilden, wobei ein entsprechendes Anschlusskabel, vorzugsweise ein Koaxial-Kabel einerseits am Deckel und andererseits am Rand angeschlossen ist, die beide durch den genannten Isolator im Bereich des Ringspaltes voneinander getrennt sind.

Denkbar ist jedoch auch, dass die beiden Antennenpole gebildet werden durch den Deckel oder den Rand und einen in der Durchbrechung, das heißt, in dem Ringspalt angeordneten Metallstreifen, an den das Anschlusskabel ebenso angeschlossen ist wie an den Deckel oder den Rand.

Selbstverständlich bezieht sich die Erfindung nicht nur auf Abdeckungen die einstofflich aus Metall bestehen, sondern auch auf solche, die aus mehreren, unterschiedlichen Materialien zusammengesetzt sind. Hierzu zählen beispielsweise Deckel, die im wesentlichen aus Beton oder einem anderen gießfähigen Material bestehen, jedoch in jedem Fall eine Funksignale abschirmende metallische Platte aufweisen, die bei Nichtvorhandensein einer Durchbrechung eine Signaldurchdringung weitgehend verhindern.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

### Es zeigen:

- Figur 1: eine Abdeckung in einer perspektivischen Ansicht;
- Figuren 2 und 3: Beispiele von weiteren Ausführungen der Erfindung jeweils in einer Draufsicht;
- Figuren 4 bis 6: jeweils einen Teilausschnitt von verschiedenen Abdeckungen in geschnitten Seitenansichten.

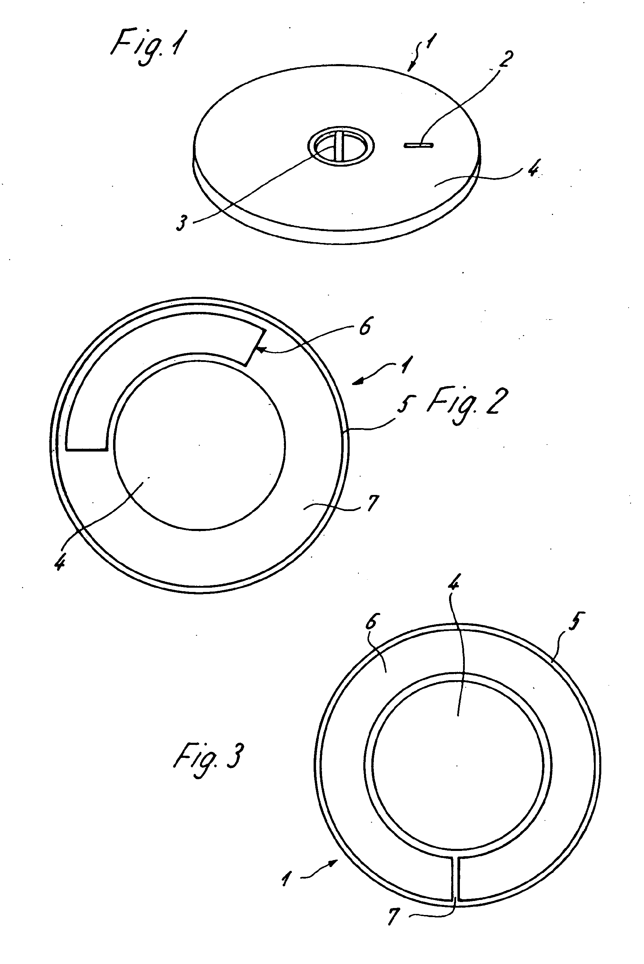

In der Figur 1 ist eine Abdeckung 1 in Form eines Deckels 4 dargestellt, mit dem ein Hohlraum, z. B. ein Schacht verschließbar ist, in dem ein Sender zur Übertragung von Messdaten platzierbar ist. Zum Anheben der Abdeckung 1 ist mittig ein Griff 3 vorgesehen.

Die Abdeckung 1 aus insbesondere metallischem Werkstoff weist eine schlitzförmige Durchbrechung 2 auf, die sich durch die gesamte Abdeckung 1 erstreckt, das heißt, insoweit durchgängig offen ist.

In dieser Durchbrechung 2 oder unmittelbar unterhalb ist eine an den Sender angeschlossene Antenne vorgesehen, mit der die Messdaten zu einer Zentrale übertragen werden.

Die Durchbrechung 2 ist vorzugsweise mit einem nicht leitenden, elastischen Material 8 versiegelt, das zumindest oberseitig flächenbündig mit den angrenzenden Randbereichen der Abdeckung 1 im übrigen verläuft.

In den Figuren 2 und 3 ist jeweils eine Abdeckung 1 dargestellt, die aus dem Deckel 4 sowie einem Rand 5 besteht, der den Deckel 4 umfänglich umschließt.

Zwischen dem Deckel 4 und dem Rand 5 ist ein Ringspalt 7 gebildet, in dem die mit dem Bezugzeichen 6 versehene Antenne platziert ist.

Im Ausführungsbeispiel gemäß Figur 2 ist die Antenne 6 als Segment eines Kreisringes vorgesehen, während die Antenne gemäß Figur 3 den Deckel 4 als Kreisring im wesentlichen umschließt.

In dem Bereich, in dem der Ringspalt 7 nicht von der Antenne 6 ausgefüllt ist, kann er mit dem nicht leitenden Material 8 vergossen sein.

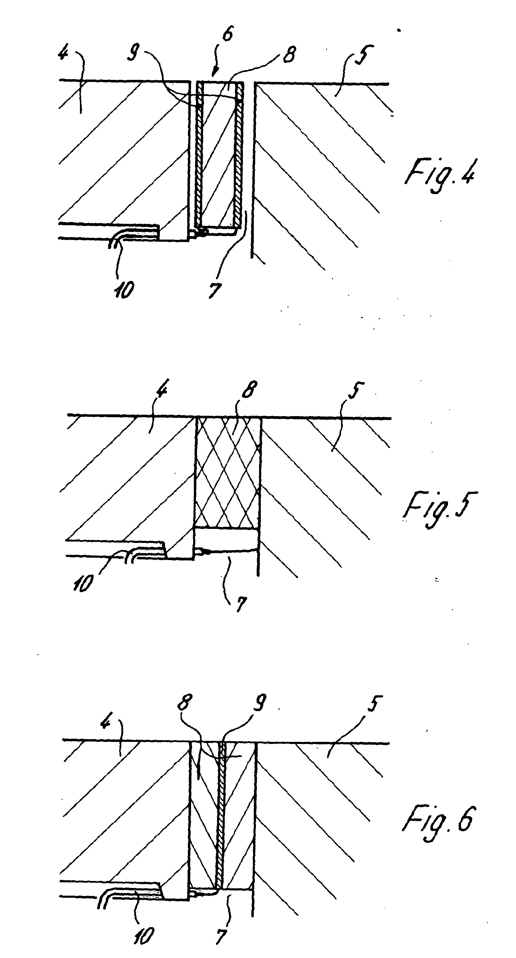

In den Figuren 4 bis 6 sind jeweils unterschiedliche Formen einer im Ringspalt 7 platzierten Antenne 6 bzw. einer aus der Anordnung des Ringspaltes 7 gebildeten Antenne 6 (Figur 5) dargestellt.

So zeigt die Figur 4 eine Antenne 6, die als Pole zwei parallel und mit Abstand verlaufende Metallstreifen 9 aufweist, die durch einen Isolator 8 elektrisch voneinander getrennt sind und die jeweils mit einem Anschlusskabel 10, vorzugsweise einem Koaxial-Kabel, verbunden sind, das wiederum an einen nicht dargestellten Sender angeschlossen ist.
Über die Metallstreifen 9, die im übrigen abständig zu dem Deckel 4 einerseits und dem Rahmen 5 andererseits, denen sie jeweils zugeordnet sind, platziert sind, erfolgt eine Signalgebung zu einem nicht dargestellten Empfänger.

Bei dem in der Figur 5 gezeigten Beispiel werden die Pole der Antenne 6 durch den aus einem elektrisch leitenden Material 8 bestehenden Deckel 4 und den aus einem vergleichbaren Material bestehenden Rand 5 gebildet, wobei der Ringspalt 7 als Isolator sowie als Füllmaterial mit einem elektrisch nicht leitenden Material 8 verfüllt ist. Der Rand 5 und der Deckel 4 sind jeweils an dem Anschlusskabel 10 angeschlossen.

Das Beispiel entsprechend der Figur 6 schließlich zeigt eine Anordnung, bei der die Antenne durch den Deckel 4 und einen etwa im mittigen Bereich des Ringspaltes 7, sich parallel zur Dicke des Deckels 4 sich erstreckenden Metallstreifen 9 gebildet ist, der zu dem Deckel 4 sowie zum Rand 5 jeweils durch einen den Zwischenraum vollständig ausfüllenden Isolator, bestehend aus dem elektrisch nicht leitenden Material 8, getrennt ist. Der Metallstreifen 9 ebenso wie der Deckel 4 sind mit dem Anschlusskabel 10 verbunden.

Als Isolator kann bei Verzicht auf das nicht leitende Material 8 auch der dann zwischen den Metallstreifen 9 oder dem Deckel 4 und/oder dem Rand 5 gebildete Luftspalt fungieren. Allerdings sollte durch geeignete konstruktive Maßnahmen eine Verschmutzung des Luftspaltes verhindert werden.

## Patentansprüche

1. Abdeckung, insbesondere aus einem metallischen Werkstoff, mit der ein Hohlraum verschließbar ist, in dem ein mit einer Antenne (6) versehener Sender zur Übertragung von Messdaten, vorzugsweise einer Leckagemessung an Gas oder Flüssigkeit führenden Rohren platziert ist, **dadurch gekennzeichnet, dass** die Abdeckung (1) eine Durchbrechung (2) zum ungehinderten Durchtritt der über die Antenne (6) ausgesandten Signale aufweist.

2. Abdeckung nach Anspruch 1, **dadurch gekennzeichnet, dass** die Durchbrechung (2) schlitzförmig ausgebildet ist.

3. Abdeckung nach Anspruch 1 oder 2, **dadurch gekennzeichnet, dass** die Durchbrechung (2) durch einen Ringspalt (7) zwischen einem Deckel (4) und einem umfänglichen Rand (5) der Abdeckung (1) gebildet ist.

4. Abdeckung nach einem der vorhergehenden Ansprüche, **dadurch gekennzeichnet, dass** die Antenne in der Durchbrechung (2) positioniert ist.

5. Abdeckung nach einem der vorhergehenden Ansprüche, **dadurch gekennzeichnet, dass** die Antenne (6) unmittelbar unterhalb der Durchbrechung (2) angeordnet ist.

6. Abdeckung nach einem der vorhergehenden Ansprüche, **dadurch gekennzeichnet, dass** die Durchbrechung (2) mit einem nicht leitenden Material (8) versiegelt ist.

7. Abdeckung nach einem der vorhergehenden Ansprüche, **dadurch gekennzeichnet, dass** das nicht leitende Material (8) elastisch ist.

8. Abdeckung nach einem der vorhergehenden Ansprüche, **dadurch gekennzeichnet, dass** das nicht leitende Material (8) flächenbündig mit den die Oberseite der Abdeckung (1) im übrigen bildenden Randbereichen verläuft.

9. Abdeckung nach einem der vorhergehenden Ansprüche, **dadurch gekennzeichnet, dass** das nicht leitende Material (8) eingegossen ist.

10. Abdeckung nach einem der vorhergehenden Ansprüche, **dadurch gekennzeichnet, dass** die Antenne (6) nahezu vollumfänglich in dem Ringspalt (7) angeordnet ist.

11. Abdeckung nach einem der vorhergehenden Ansprüche, **dadurch gekennzeichnet, dass** die Antenne (6) in einem umfänglichen Segmentbereich des Ringspaltes (7) angeordnet ist.

12. Abdeckung nach einem der vorhergehenden Ansprüche, **dadurch gekennzeichnet, dass** die Antenne (6) zwei mit Abstand zueinander verlaufende Streifen (9) aus einem elektrisch leitenden Material aufweist, die durch das einen Isolator bildende nicht leitende Material (8) getrennt sind und die an ein Anschlusskabel (10), vorzugsweise ein Koaxial-Kabel, angeschlossen sind.

13. Abdeckung nach einem der vorhergehenden Ansprüche, **dadurch gekennzeichnet, dass** die aus Metall bestehenden Streifen (9) jeweils mit Abstand zu dem Deckel (4) bzw. dem Rand (5) in dem Ringspalt (7) platziert sind.

14. Abdeckung nach einem der vorhergehenden Ansprüche, **dadurch gekennzeichnet, dass** die Antenne durch die abständig zueinander angeordneten Deckel (4) und Rand (5) gebildet ist, wobei der Ringspalt (7) mit dem nicht leitenden Material (8) vollumfänglich ausgefüllt ist.

15. Abdeckung nach einem der vorhergehenden Ansprüche, **dadurch gekennzeichnet, dass** die Antenne (6) durch den Deckel (4) oder den Rand (5) sowie einem aus einem elektrisch leitenden Material, vorzugsweise Metall, bestehenden Streifen (9) gebildet ist, der in der Durchbrechung bzw. dem Ringspalt (7) platziert ist und durch das nicht leitende Material (8) vom Deckel (4) und/oder vom Rand (5) getrennt ist.
